# EUROPÄISCHE PATENTSCHRIFT

(11) **EP 3 740 416 B1**
(45) Veröffentlichungstag und Bekanntmachung des Hinweises auf die Patenterteilung: **05.10.2022**
(21) Anmeldenummer: 19701168.7
(22) Anmeldetag: 15.01.2019
(51) Int. Cl.: B62D 5/00, B62D 5/04, B62D 6/00

(54) **VERFAHREN ZUR STEUERUNG EINES STEER-BY-WIRE-LENKSYSTEMS BEIM ERREICHEN EINER MAXIMAL ZUR VERFÜGUNG STEHENDEN LEISTUNG DES LENKSTELLERS**
METHOD FOR CONTROLLING A STEER-BY-WIRE STEERING SYSTEM WHEN A MAXIMUM AVAILABLE POWER OF THE STEERING ADJUSTER IS REACHED
PROCÉDÉ DE COMMANDE D'UN SYSTÈME DE DIRECTION À COMMANDE ÉLECTRIQUE LORSQUE LA PUISSANCE MAXIMALE DISPONIBLE POUR L'ACTIONNEUR DE DIRECTION EST ATTEINTE

(30) Priorität: 19.01.2018 DE 102018101181
(43) Veröffentlichungstag der Anmeldung: 25.11.2020
(73) Patentinhaber: thyssenkrupp Presta AG, 9492 Eschen (LI); thyssenkrupp AG, 45143 Essen (DE)
(72) Erfinder: POLMANS, Kristof, 6464 Tarrenz (AT); ROHRMOSER, Manuel, 6712 Thüringen (AT)
(74) Vertreter: thyssenkrupp Intellectual Property GmbH
(86) Internationale Anmeldenummer: PCT/EP2019/050871
(87) Internationale Veröffentlichungsnummer: WO 2019/141652

(56) Entgegenhaltungen:
- EP-A2- 0 854 075
- EP-A2- 1 468 900

## Beschreibung

Die vorliegende Erfindung betrifft ein Verfahren zur Steuerung eines Steer-by-Wire-Lenksystems mit den Merkmalen des Oberbegriffs des Anspruchs 1 und 4 und ein Steer-by-Wire-Lenksystem mit den Merkmalen des Oberbegriffs des Anspruchs 8.

Gattungsgemäße Verfahren zur Steuerung eines Steer-by-Wire-Lenksystems und ein Steer-by-Wire Lenksystem sind aus EP 1 468 900 A2 bekannt.

Bei Steer-by-Wire-Lenksystemen ist die Stellung der gelenkten Räder nicht direkt mit dem Lenkeingabemittel, beispielsweise einem Lenkrad, gekoppelt. Es besteht eine Verbindung zwischen dem Lenkrad und den gelenkten Rädern über elektrische Signale. Der Fahrerlenkwunsch wird von einem Lenkwinkelsensor abgegriffen, und in Abhängigkeit von dem Fahrerlenkwunsch wird über einen Lenksteller die Stellung der gelenkten Räder geregelt. Eine mechanische Verbindung zu den Rädern ist nicht vorgesehen, sodass nach Betätigung des Lenkrads keine unmittelbare Kraft-Rückmeldung an den Fahrer übermittelt wird. Um bei Steer-by-Wire-Lenkungen die Rückwirkungen der Straße auf das Lenkrad zu simulieren, ist es notwendig, am Lenkrad oder der Lenksäule einen Feedback-Aktuator (FBA) vorzusehen, welcher in Abhängigkeit von den gewünschten Rückwirkungen der Lenkhandhabe ein Lenkgefühl aufprägt.

Der Regelalgorithmus oder das Regelverfahren einer Steer-by-Wire-Lenkung ist bevorzugt so ausgelegt, dass die Position des elektrischen Lenkstellers bzw. die Position der Zahnstange, mit möglichst geringer Zeitverzögerung und ohne Überschwingungen einem vorgegeben Sollwert folgt. Außerdem ist es erwünscht, dass die Positionsregelung ein robustes und gegenüber internen und externen Störgrößen unempfindliches Regelverhalten aufweist.

Bei Steer-by-Wire-Lenkungen kann es vorkommen, dass die Leistung des elektrischen Lenkstellers nicht ausreicht, schnell und exakt den gewünschten Radlenkwinkel einzustellen. In diesem Fall kann die von dem Lenksteller in Längsrichtung verschobene Zahnstange nicht der gewünschten Zahnstangenposition oder dem gewünschten Lenkraddrehwinkel folgen. Dieses Problem tritt insbesondere beim Parkvorgang auf, da in diesem Fall die Leistungsanforderungen am Höchsten sind. Kann der Lenksteller das berechnete Drehmoment nicht erbringen, kommt es zu einem Offset zwischen der Sollposition und der Istposition der Zahnstange. Das führt dazu, dass das Getriebe weiterlenkt bis die Sollposition erreicht ist, auch wenn der Fahrer bereits den Lenkvorgang beendet hat. Das Eingreifen des Lenkstellers ohne Lenkeingabe ist für den Fahrer sehr irritierend und daher nicht akzeptabel.

Es ist deshalb Aufgabe der vorliegenden Erfindung, ein verbessertes Verfahren zur Steuerung eines Steer-by-Wire-Lenksystems anzugeben, bei dem eine fehlende Leistung des Lenkstellers nicht oder nur unwesentlich vom Fahrer wahrgenommen wird.

Diese Aufgabe wird von einem Verfahren zur Steuerung eines Steer-by-Wire-Lenksystems für Kraftfahrzeuge mit den Merkmalen des Anspruchs 1 und des Anspruchs 4 und einem Steer-by-Wire-Lenksystems für Kraftfahrzeuge mit den Merkmalen des Anspruchs 8 gelöst. In den Unteransprüchen sind vorteilhafte Weiterbildungen der Erfindung genannt.

Demnach ist ein Verfahren zur Steuerung eines Steer-by-Wire-Lenksystems für Kraftfahrzeuge umfassend einen auf die gelenkten Räder wirkenden, in Abhängigkeit eines Fahrerlenkwunsches elektronisch geregelten Lenksteller, der eine translatorische Bewegung einer Zahnstange zur Lenkung der Räder bewirkt, und einen Rückwirkungen der Straße auf ein Lenkrad in Form eines Rückstellmomentes übertragenden Feedback-Aktuator vorgesehen, wobei anhand eines Lenkradlenkwinkels in einer Signalverarbeitungseinheit eine Sollposition der Zahnstange ermittelt wird und diese mit einer Ist-Position der Zahnstange oder mit einem gemessenen Radlenkwinkel als Ist-Wert an eine Regeleinheit übermittelt wird, die daraus ein Solldrehmoment des Elektromotors des Lenkstellers berechnet, wobei folgende weitere Verfahrensschritte zur Steuerung vorgesehen sind:
- Überwachen einer zum Erreichen der ermittelten Sollposition benötigten Leistung des Elektromotors;
- Falls die benötigte Leistung die maximale Leistung des Elektromotors überschreitet, Betreiben des Elektromotors mit der maximalen Leistung und Erhöhung eines am Lenkrad anliegenden der weiteren Verdrehung entgegenwirkenden Rückstellmomentes.

Dadurch kann verhindert werden, dass der Fahrer des Kraftfahrzeuges die fehlende Leistung des Lenkstellers beim Lenkvorgang spürt.

Dabei ist es bevorzugt, wenn die Erhöhung des am Lenkrad anliegenden Drehmomentes mittels des Feedback-Aktuators erfolgt, der ein dem Lenkbefehl entgegengesetztes Gegendrehmoment in eine mit dem Lenkrad verbundene Lenkwelle einleitet. Vorzugsweise ist die Erhöhung des am Lenkrad anliegenden Drehmomentes so dimensioniert ist, dass ein Versatz zwischen dem Lenkradlenkwinkel und dem Radlenkwinkel verringert, besonders bevorzugt sogar verhindert, werden kann.

Weiterhin ist ein Verfahren zur Steuerung eines Steer-by-Wire-Lenksystems für Kraftfahrzeuge umfassend einen auf die gelenkten Räder wirkenden, in Abhängigkeit eines Fahrerlenkwunsches elektronisch geregelten Lenksteller, der eine translatorische Bewegung einer Zahnstange zur Lenkung der Räder bewirkt, und einen Rückwirkungen der Straße auf ein Lenkrad in Form eines Rückstellmomentes übertragenden Feedback-Aktuator vorgesehen, wobei anhand eines Lenkradlenkwinkel in einer Signalverarbeitungseinheit eine Sollposition der Zahnstange ermittelt wird und diese mit einer Ist-Position der Zahnstange oder mit einem gemessenen Radlenkwinkel als Ist-Wert an eine Regeleinheit übermittelt wird, die daraus ein Solldrehmoment des Elektromotors des Lenkstellers berechnet, wobei folgende weitere Verfahrensschritte zur Steuerung vorgesehen sind:
- Überwachen einer zum Erreichen der ermittelten Sollposition benötigten Leistung des Elektromotors;
- Falls die benötigte Leistung die maximale Leistung des Elektromotors überschreitet, Betreiben des Elektromotors mit der maximalen Leistung und Reduzierung der zeitlichen Änderung der Sollposition der Zahnstange und zwar derart, dass bei einer neutralen Position des Lenkrades die Istposition der Zahnstange der Sollposition der Zahnstange entspricht.

Dadurch kann ein Nacheilen der Zahnstange gegenüber der Sollposition verhindert werden und der Fahrer bekommt die fehlende Leistung des Lenkstellers kaum oder gar nicht zu spüren.

Dabei weist die Regeleinheit vorzugsweise eine Begrenzungseinrichtung auf, die die zeitliche Änderung der Sollposition derart limitiert, dass ein beim Einlenken auftretender Offset zwischen Soll- und Istposition der Zahnstange, beim Zurücklenken wieder korrigiert wird.

Zusätzlich kann für den Fall, dass die benötigte Leistung die maximale Leistung des Elektromotors überschreitet, vorgesehen sein, dass ein am Lenkrad anliegendes Drehmoment das der Verdrehung des Lenkrads entgegenwirkt erhöht wird. Vorzugsweise erfolgt die Erhöhung des am Lenkrad anliegenden Drehmomentes mittels des Feedback-Aktuators, der ein dem Lenkbefehl entgegengesetztes Gegendrehmoment in eine mit dem Lenkrad verbundene Lenkwelle einleitet.

Weiterhin ist ein Steer-by-Wire-Lenksystem für ein Kraftfahrzeug vorgesehen, wobei das Lenksystem einen auf gelenkten Räder mittels eines Lenkgetriebes wirkenden elektronisch regelbaren Lenksteller, eine Signalverarbeitungseinheit, einen Feedback-Aktuator, der über ein Lenkrad von einem Fahrer mit einem Fahrerwunsch für einen Lenkwinkel beaufschlagt werden kann und ein Feedback-Signal an das Lenkrad als Reaktion auf den Fahrerwunsch und einen Fahrzustand des Kraftfahrzeugs ausgibt und eine Einrichtung zur Signalübertragung, die den Fahrerwunsch an die Signalverarbeitungseinheit übermittelt, umfasst, wobei die Signalverarbeitungseinheit eine Sollposition des Lenkgetriebes ermittelt und diese mit einer Ist-Position der Zahnstange oder mit einem gemessenen Radlenkwinkel als Ist-Wert an eine Regeleinheit übermittelt, die den Lenksteller ansteuert, um den Fahrerwunsch in eine Auslenkung der gelenkten Räder zu transformieren. Das Steer-by-Wire-Lenksystem ist dazu eingerichtet ein zuvor beschriebenes Verfahren auszuführen.

Zwei bevorzugte Ausführungsformen der Erfindung werden nachfolgend anhand der Zeichnungen näher erläutert. Gleichartige oder gleichwirkende Bauteile werden in den Figuren mit denselben Bezugszeichen bezeichnet. Es zeigen:
- Fig. 1:: eine schematische Darstellung eines Steer-by-Wire-Lenksystems,
- Fig. 2:: eine Draufsicht auf ein Kraftfahrzeug in Kurvenfahrt,
- Fig. 3:: ein Blockdiagramm einer Steuerung des Steer-by-Wire-Lenk-systems,
- Fig. 4:: eine schematische Darstellung eines Lenkradlenkwinkels und eines Radlenkwinkels eines Steer-by-Wire-Lenksystems,
- Fig. 5:: ein Diagramm eines zeitlichen Verlaufs eines Ist- und Soll-Drehmomentes des Lenkstellers bei einer Lenkbewegung, sowie
- Fig. 6:: ein Diagramm eines zeitlichen Verlaufs der Ist- und Soll-Zahnstangenposition bei einer Lenkbewegung, sowie der Ist-Zahnstangenposition mit einer erfindungsgemäßen Korrektur.

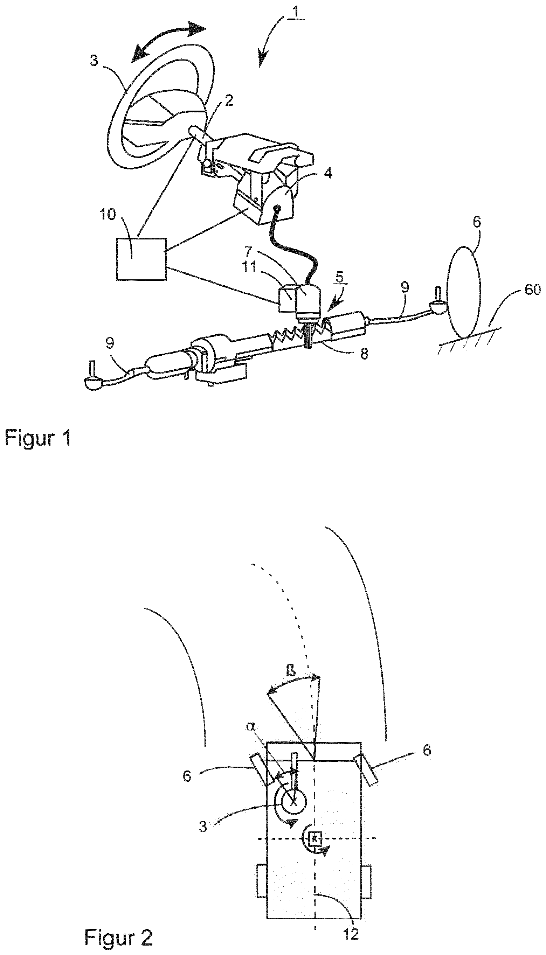

In der Figur 1 ist ein Steer-by-Wire-Lenksystem 1 gezeigt. An einer Lenkwelle 2 ist ein nicht dargestellter Drehwinkelsensor angebracht, welcher das durch Drehen eines Lenkeingabemittels 3, welches im Beispiel als Lenkrad ausgebildet ist, aufgebrachten Lenkradlenkwinkel α erfasst. Es kann aber zusätzlich auch ein Lenkmoment erfasst werden. Des Weiteren ist an der Lenkwelle 2 ein Feedback-Aktuator 4 angebracht, welcher dazu dient, die Rückwirkungen von der Fahrbahn 60 auf das Lenkrad 3 zu simulieren und somit dem Fahrer eine Rückmeldung über das Lenk- und Fahrverhalten des Fahrzeugs zu geben. Ein elektrischer Lenksteller 5 steuert die Stellung der gelenkten Räder 6. Der Lenksteller 5 wirkt über ein Lenkstangen-Lenkgetriebe 7, wie beispielsweise einem Zahnstangen-Lenkgetriebe, wobei die Zahnstange 8 über nicht dargestellte Kugelgelenke mit Spurstangen 9 und anderen Bauteilen mittelbar auf die gelenkten Räder 6 wirkt. In einer Steuerungseinheit, die auch Signalverarbeitungseinheit 10 genannt werden kann, wird aus dem gemessenen Lenkradlenkwinkel α eine Sollposition Xd der Zahnstange und die zur Erreichen der Sollposition benötigte Ansteuerung eines Elektromotors 11 des Lenkstellers bestimmt.

In der Figur 2 sind der Lenkradlenkwinkel α und der Radlenkwinkel β dargestellt. Der Lenkradlenkwinkel α ist der vom Fahrer am Lenkrad 3 eingebrachter Lenkwinkel. In der Geradeausstellung beträgt dieser Null Grad. Der Radlenkwinkel β ist hingegen der Winkel, um den das Fahrzeugrad 6 eingeschlagen bzw. verschwenkt ist. Der Radlenkwinkel β liegt zwischen der Kraftfahrzeuglängsachse 12 und der senkrecht zur Rotationsachse des Rades liegenden Querachse des Rades 6.

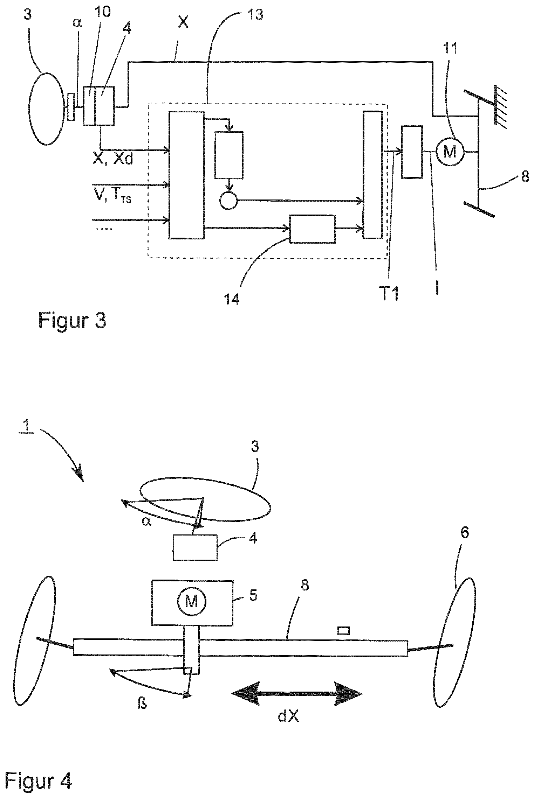

Figur 3 zeigt eine Steuerung des Lenkstellers 5. Aus dem am Lenkrad 3 gemessenen Lenkradlenkwinkel α wird in der Signalverarbeitungseinheit 10 eine Sollposition Xd der Zahnstange 8 ermittelt. Die ermittelte Sollposition Xd sowie eine Ist-Position der Zahnstange 8 oder des Verschwenkwinkels β des Rades (Radlenkwinkel) als Ist-Wert X wird an eine Regeleinheit 13 übermittelt. Als mögliche weitere Eingangsgrößen sind im Beispiel die Fahrzeuggeschwindigkeit V und/oder das am Lenkrad aufgebrachte Drehmoment T_{TS} und/oder weitere gemessene oder berechnete Größen vorgesehen. Die Regeleinheit 13 ermittelte als Sollgröße, das Stelldrehmoment T1 des Elektromotors 11 des Lenkstellers 5. Auf Basis dieses Stelldrehmoments T1 wird dann in bekannter Weise im Elektroantrieb ein jeweiliger Sollstrom I bestimmt, der dem Elektromotor 11, der das Drehmoment aufbringt, zugeführt wird.

Parallel zur Regelstrecke ist eine Adaptionseinrichtung 14 vorgesehen, die das Stelldrehmoment T1 beeinflusst, für den Fall, dass die zur Regelung benötigte Lenkleistung die maximale Leistung des Lenkstellers überschreitet.

In der Adaptionseinrichtung 14 wird die vom Lenksteller 5 angeforderte Leistung überwacht. Überschreitet die für den Lenkvorgang benötigte Leistung das Maximum der zur Verfügung stehenden Leistung, wird der Lenksteller 5 mit maximaler Leistung betrieben. In diesem Fall kann der Lenksteller 5 der Sollposition Xd der Zahnstange 8 nicht folgen, da für das Erreichen der Sollposition Xd eine höhere Leistung als die zur Verfügung stehende Leistung benötigt wird. Der Feedback-Aktuator 4 gibt an die Lenkwelle 2 und damit an das Lenkrad 3 ein gegen das Verdrehen gerichtetes Gegenmoment aus, das dem Fahrer das bekannte Verhalten eines Lenksystems simuliert. Im weiteren wird das Gegenmoment auch einfach als Drehmoment bezeichnet, das am Lenkrad anliegt.

Es werden zwei Verfahren zur Regelung der Steer-by-Wire Lenkung bei Überschreiten der maximalen Leistung des Lenkstellers 5 vorgeschlagen.

Das erste Verfahren sieht beim Erreichen der maximal zur Verfügung stehenden Leistung des Lenkstellers 5 eine Erhöhung des Drehmomentes am Lenkrad 3 vor. Die Adaptionseinrichtung 14 steht dafür in Kommunikation mit dem Feedback-Aktuator 4 und teilt ein Überschreiten der maximal zur Verfügung stehenden Leistung des Lenkstellers 5 dem Feedback-Aktuator 4 mit. Der Feedback-Aktuator 4 bringt ein erhöhtes, dem Lenkbefehl entgegengesetztes Gegendrehmoment in die Lenkwelle 2 ein. Die Lenkbewegung des Fahrers wird damit gedämpft, so dass ein Versatz zwischen Zahnstangenposition X und Lenkradlenkwinkel α verhindert werden kann.

Beim zweiten Verfahren wird bei Erreichen der Maximal zur Verfügung stehenden Leistung des Lenkstellers die zeitliche Änderung der Sollposition Xd der Zahnstange 8 verringert. Eine Abweichung zwischen der Sollposition Xd und der Istposition X der Zahnstange 8 wird somit zugelassen. Es kommt aber nicht zu einer Phasenverschiebung zwischen der Soll- und Istposition, d. h. die Zahnstange 8 eilt nicht der Sollposition Xd nach. Darunter wird verstanden, dass bei einer Geradeausfahrt bzw. einer neutralen Position des Lenkrades 3 die Istposition X der Zahnstange 8 der Sollposition Xd der Zahnstange 8 entspricht. Insbesondere entspricht die Istposition X der Zahnstange 8 auch der Sollposition Xd der Zahnstange 8 beim Erreichen von lokalen oder globalen Maxima und Minima und/oder Wendepunkten in dem zeitlichen Verlauf der Zahnstangenposition. Ein Nacheilen der Zahnstange 8 kann so verhindert werden. Der Fahrer spürt die Abweichung zwischen der Soll- und Istposition in diesem Fall nicht. Zur Begrenzung der zeitlichen Änderung der Sollposition Xd weist die Adaptionseinrichtung 14 eine intelligente Begrenzungseinrichtung 15 auf. Das Lenkgefühl des Feedback-Aktuators 4 wird in diesem Fall bevorzugt nicht angepasst. Die Begrenzungseinrichtung 15 limitiert die zeitliche Änderung der Sollposition Xd derart, dass ein beim Einlenken auftretender Offset zwischen Soll- und Istposition der Zahnstange beim Zurücklenken wieder korrigiert wird. Im einfachsten Fall wird dabei die Differenz zwischen dem geforderten und dem eingestellten Radlenkwinkel ß im Verhältnis zum vom Fahrer eingegebenen Lenkradlenkwinkel α proportional umgerechnet, so dass im Falle des Geradeauslaufs des Fahrzeugs beide Winkel den Wert 0 einnehmen.

Fig. 4 zeigt schematisch eine Steer-by-Wire Lenkung 1 mit einem Lenkrad 3, einem Feedback-Aktuator 4, einem auf eine Zahnstange 8 wirkenden Lenksteiler 5 und mit der Zahnstange 8 über Spurstangen verbundene lenkbare Räder 6. Der Lenksteller 5 bewirkt eine translatorische Bewegung der Zahnstange 8. Die Zahnstangenposition X ändert sich dabei zeitlich mit dX. Die Bewegung der Zahnstange 8 führt zu einem Verschwenken der Räder 6 um den Radlenkwinkel β.

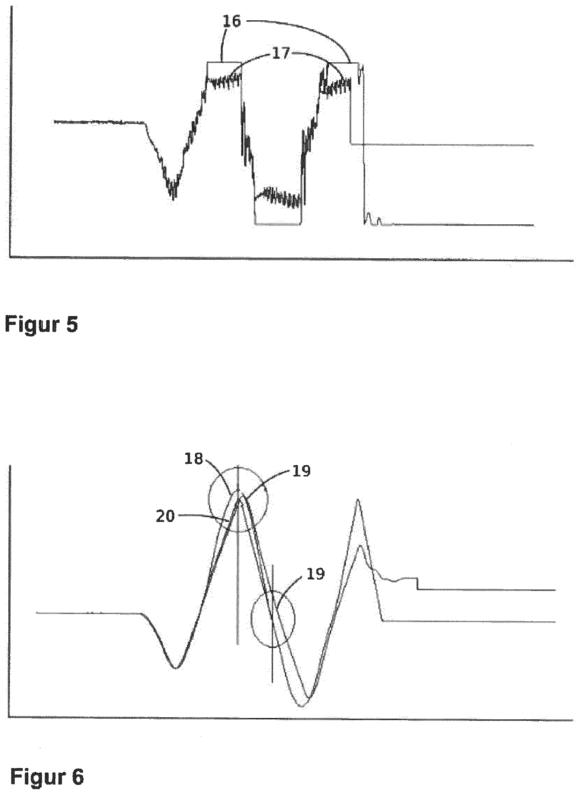

In der Figur 5 ist ein zeitlicher Verlauf eines Drehmomentes des Lenkstellers 5 in Nm dargestellt. Eine erste Kurve 16 zeigt die Drehmoment Anfrage an den Lenksteller (Soll-Drehmoment T1). Eine zweite Kurve 17 zeigt das vom Lenksteiler tatsächlich aufgebrachte Drehmoment (Ist-Drehmoment). Ab einer Maximalleistung des Lenkstellers kann das angefragte Soll-Drehmoment T1 nicht mehr von dem Lenksteller zur Verfügung gestellt werden. Das Ist-Drehmoment bleibt daher deutlich hinter dem Solldrehmoment T1 zurück.

Figur 6 zeigt den zeitlichen Verlauf der Zahnstangenposition. Eine erste Kurve 18 zeigt die Soll-Zahnstangenposition Xd. Eine zweite Kurve 19 zeigt die Ist-Zahnstangenposition X. Die zum Erreichen der Sollposition benötigte Leistung kann von dem Elektromotor des Lenkstellers beim zweiten Einschlagen des Lenkrads nicht aufgebracht werden. Die Lenkgeschwindigkeit am Lenkrad ist zu hoch. Die Soll-Zahnstangenposition Xd kann nur mit einer zeitlichen Verzögerung erreicht werden. Die Zahnstange eilt der Sollposition somit nach. Dieser Zustand ist ungewünscht, da das Nacheilen der Zahnstange von dem Fahrer als störend empfunden wird. So lenken die Räder beispielsweise weiter ein, obwohl eine Lenkbewegung am Lenkrad nicht mehr stattfindet. Die dritte Kurve 20 zeigt die Ist-Zahnstangenposition mit aktivierter Begrenzungseinrichtung. Das Maximum der zweiten Auslenkung bzw. der Zahnstangenposition und die darauffolgende neutrale Position am Lenkrad werden von der Soll-Zahnstangenposition und der adaptierten Ist-Zahnstangenposition zeitgleich erreicht. In dem Maximum liegt dabei ein Offset zwischen der Soll- und Istposition vor, welches beim Zurücklenken wieder korrigiert wird, so dass in neutraler Position beide Kurven 18,20 ihren Nulldurchgang haben.

Es kann auch vorteilhaft sein, das erste Verfahren und das zweite Verfahren gleichzeitig anzuwenden, d. h. sowohl auf das Lenkrad mittels des Feedback-Aktuators einzuwirken, als auch mittels der intelligenten Begrenzungseinrichtung ein Nacheilen der Zahnstange zu vermeiden.

## Patentansprüche

1. Verfahren zur Steuerung eines Steer-by-Wire-Lenksystems (1) für Kraftfahrzeuge umfassend einen auf die gelenkten Räder (6) wirkenden, in Abhängigkeit eines Fahrerlenkwunsches elektronisch geregelten Lenksteiler (5), der eine translatorische Bewegung einer Zahnstange (8) zur Lenkung der Räder (6) bewirkt, und einen Rückwirkungen der Straße (60) auf ein Lenkrad (3) in Form eines Rückstellmomentes übertragenden Feedback-Aktuator (4), wobei anhand eines Lenkradlenkwinkel (a) in einer Signalverarbeitungseinheit (10) eine Sollposition (Xd) der Zahnstange (8) ermittelt wird und diese mit einer Ist-Position der Zahnstange (8) oder mit einem gemessenen Radlenkwinkel (β) als Ist-Wert (X) an eine Regeleinheit (13) übermittelt wird, die daraus ein Solldrehmoment (T1) des Elektromotors (11) des Lenkstellers (5) berechnet, **dadurch gekennzeichnet, dass** folgende weitere Verfahrensschritte zur Steuerung vorgesehen sind:
• Überwachen einer zum Erreichen der ermittelten Sollposition (Xd) benötigten Leistung des Elektromotors (11);
• Falls die benötigte Leistung die maximale Leistung des Elektromotors (11) überschreitet, Betreiben des Elektromotors (11) mit der maximalen Leistung und Erhöhung eines am Lenkrad (3) anliegenden der weiteren Verdrehung entgegenwirkenden Rückstellmoments.

2. Verfahren nach Anspruch 1, **dadurch gekennzeichnet, dass** die Erhöhung des am Lenkrad (3) anliegenden Drehmomentes mittels des Feedback-Aktuators (4) erfolgt, der ein dem Lenkbefehl entgegengesetztes Gegendrehmoment in eine mit dem Lenkrad (3) verbundene Lenkwelle (2) einleitet.

3. Verfahren nach Anspruch 1 oder 2, **dadurch gekennzeichnet, dass** die Erhöhung des am Lenkrad (3) anliegenden Drehmomentes so dimensioniert ist, dass ein Versatz zwischen dem Lenkradlenkwinkel (α) und dem Radlenkwinkel (β) verringert werden kann.

4. Verfahren zur Steuerung eines Steer-by-Wire-Lenksystems (1) für Kraftfahrzeuge umfassend einen auf die gelenkten Räder (6) wirkenden, in Abhängigkeit eines Fahrerlenkwunsches elektronisch geregelten Lenksteller (5), der eine translatorische Bewegung einer Zahnstange (8) zur Lenkung der Räder (6) bewirkt, und einen Rückwirkungen der Straße (60) auf ein Lenkrad (3) in Form eines Rückstellmomentes übertragenden Feedback-Aktuator (4), wobei anhand eines Lenkradlenkwinkel (α) in einer Signalverarbeitungseinheit (10) eine Sollposition (Xd) der Zahnstange (8) ermittelt wird und diese mit einer Ist-Position der Zahnstange (8) oder mit einem gemessenen Radlenkwinkel (β) als Ist-Wert (X) an eine Regeleinheit (13) übermittelt wird, die daraus ein Solldrehmoment (T1) des Elektromotors (11) des Lenkstellers (5) berechnet, **dadurch gekennzeichnet, dass** folgende weitere Verfahrensschritte zur Steuerung vorgesehen sind:
• Überwachen einer zum Erreichen der ermittelten Sollposition (Xd) benötigten Leistung des Elektromotors (11);
• Falls die benötigte Leistung die maximale Leistung des Elektromotors (11) überschreitet, Betreiben des Elektromotors (11) mit der maximalen Leistung und Reduzierung der zeitlichen Änderung der Sollposition (Xd) der Zahnstange (8) und zwar derart, dass bei einer neutralen Position des Lenkrades (3) die Istposition (X) der Zahnstange (8) der Sollposition (Xd) der Zahnstange (8) entspricht.

5. Verfahren nach Anspruch 4, **dadurch gekennzeichnet, dass** die Regeleinheit (13) eine Begrenzungseinrichtung (15) aufweist, die die zeitliche Änderung der Sollposition (Xd) derart limitiert, dass ein beim Einlenken auftretender Offset zwischen Soll- und Istposition der Zahnstange (8) beim Zurücklenken wieder korrigiert wird.

6. Verfahren nach Anspruch 4 oder 5, **dadurch gekennzeichnet, dass** folgende weitere Verfahrensschritte zur Steuerung vorgesehen sind:
• Falls die benötigte Leistung die maximale Leistung des Elektromotors (11) überschreitet, Erhöhung eines am Lenkrad (3) anliegenden der weiteren Verdrehung entgegenwirkenden Rückstellmoments.

7. Verfahren nach Anspruch 6, **dadurch gekennzeichnet, dass** die Erhöhung des am Lenkrad (3) anliegenden Drehmomentes mittels des Feedback-Aktuators (4) erfolgt, der ein dem Lenkbefehl entgegengesetztes Gegendrehmoment in eine mit dem Lenkrad (3) verbundene Lenkwelle (2) einleitet.

8. Steer-by-Wire-Lenksystem (1) für ein Kraftfahrzeug umfassend:
- einen auf gelenkten Räder (7) mittels eines Lenkgetriebes wirkenden elektronisch regelbaren Lenksteller (6),
- eine Signalverarbeitungseinheit (10),
- einen Feedback-Aktuator (4), der über ein Lenkrad (3) von einem Fahrer mit einem Fahrerwunsch für einen Lenkwinkel beaufschlagt werden kann und ein Feedback-Signal an das Lenkrad (3) als Reaktion auf den Fahrerwunsch und einen Fahrzustand des Kraftfahrzeugs ausgibt,
- eine Einrichtung zur Signalübertragung, die den Fahrerwunsch an die Signalverarbeitungseinheit (10) übermittelt,
- wobei die Signalverarbeitungseinheit (10) eine Sollposition (Xd) des Lenkgetriebes (8) ermittelt und diese mit einer Ist-Position der Zahnstange (8) oder mit einem gemessenen Radlenkwinkel (β) als Ist-Wert (X) an eine Regeleinheit (13) übermittelt, die den Lenksteller (5) ansteuert, um den Fahrerwunsch in eine Auslenkung der gelenkten Räder (6) zu transformieren, **dadurch gekennzeichnet, dass** das Steer-by-Wire-Lenksystem (1) dazu eingerichtet ist, ein Verfahren nach einem der Ansprüche 1 bis 7 auszuführen.

## Claims

1. A method for controlling a steer-by-wire steering system (1) for motor vehicles comprising a steering actuator (5) which acts on the steered wheels (6), is controlled electronically in accordance with a driver's steering request and brings about a translatory movement of a steering rack (8) in order to steer the wheels (6), and a feedback actuator (4) which transmits reactions of the road (60) to a steering wheel (3) in the form of an aligning torque, wherein a setpoint position (Xd) of the steering rack (8) is determined in a signal processing unit (10) on the basis of a steering wheel steering angle (a), and said setpoint position (Xd) is transmitted with an actual position of the steering rack (8) or with a measured wheel steering angle (β) as an actual value (X) to a control unit (13) which calculates therefrom a setpoint torque (T1) of the electric motor (11) of the steering actuator (5) **characterized in that** the following further method steps are provided for the control:
• monitoring the power of the electric motor (11) required to reach the determined setpoint position (Xd);
• if the required power exceeds the maximum power of the electric motor (11), operating the electric motor (11) with the maximum power and increasing an aligning torque which is present at the steering wheel (3) and counteracts the further rotation.

2. The method as claimed in claim 1, **characterized in that** the increase in the torque which is present at the steering wheel (3) is carried out by means of the feedback actuator (4) which applies a counter-torque, opposed to the steering command, into a steering shaft (2) which is connected to the steering wheel (3).

3. The method as claimed in claim 1 or 2, **characterized in that** the increase in the torque which is present at the steering wheel (3) is dimensioned such that an offset between the steering wheel steering angle (α) and the wheel steering angle (β) can be reduced.

4. A method for controlling a steer-by-wire steering system (1) for motor vehicles comprising a steering actuator (5) which acts on the steered wheels (6), is controlled electronically in accordance with a driver's steering request and brings about a translatory movement of a steering rack (8) in order to steer the wheels (6), and a feedback actuator (4) which transmits reactions of the road (60) to a steering wheel (3) in the form of an aligning torque, wherein a setpoint position (Xd) of the steering rack (8) is determined in a signal processing unit (10) on the basis of a steering wheel steering angle (a), and said setpoint position (Xd) is transmitted with an actual position of the steering rack (8) or with a measured wheel steering angle (β) as an actual value (X) to a control unit (13) which calculates therefrom a setpoint torque (T1) of the electric motor (11) of the steering actuator (5), **characterized in that** the following further method steps for the control are provided:
• monitoring a power level of the electric motor (11) which is required to reach the determined setpoint position (Xd);
• if the required power exceeds the maximum power of the electric motor (11), operating the electric motor (11) with the maximum power and reducing the change in the setpoint position (Xd) of the steering rack (8) over time, specifically in such a way that in a neutral position of the steering wheel (3) the actual position (X) of the steering rack (8) corresponds to the setpoint position (Xd) of the steering rack (8).

5. The method as claimed in claim 4, **characterized in that** the control unit (13) has a limiting device (15) which limits the change in the setpoint position (Xd) over time in such a way that an offset which occurs between the setpoint position and actual position of the steering rack (8) in the case of turning in is corrected again in the case of turning back.

6. The method as claimed in claim 4 or 5, **characterized in that** the following further method steps are provided for the control:
• if the required power exceeds the maximum power of the electric motor (11), increasing an aligning torque which is present at the steering wheel (3) and counteracts the further rotation.

7. The method as claimed in claim 6, **characterized in that** the increase in the torque which is present at the steering wheel (3) is carried out by means of the feedback actuator (4) which applies a counter-torque, opposed to the steering command, to a steering shaft (2) which is connected to the steering wheel (3).

8. A steer-by-wire steering system (1) for a motor vehicle comprising:
- an electronically controllable steering actuator (5) which acts on steered wheels (6) by means of a steering gear,
- a signal processing unit (10),
- a feedback actuator (4) to which a driver's request for a steering angle can be applied by a driver via a steering wheel (3), and which outputs a feedback signal to the steering wheel (3) in reaction to the driver's request and a driving state of the motor vehicle,
- a device for transmitting signals, which transmits the driver's request to the signal processing unit (10),
- wherein the signal processing unit (10) determines a setpoint position (Xd) of the steering gear (8) and transmits it with an actual position of the steering rack (8) or with a measured wheel steering angle (β) as an actual value (X) to a control unit (13) which actuates the steering actuator (5) in order to transform the driver's request into a deflection of the steered wheels (6), **characterized in that** the steer-by-wire steering system (1) is configured to carry out a method as claimed in one of claims 1 to 7.

## Revendications

1. Procédé de commande d'un système de direction à commande électrique (1) pour des véhicules automobiles, comprenant un organe final de direction (5) agissant sur les roues directrices (6) et régulé électroniquement en fonction d'un souhait de direction d'un conducteur, lequel produit un mouvement de translation d'une crémaillère (8) en vue de diriger les roues (6), et un actionneur de rétroaction (4) qui transmet les rétroactions de la route (60) à un volant de direction (3) sous la forme d'un moment de rappel, une position de consigne (Xd) de la crémaillère (8) étant déterminée dans une unité de traitement de signal (10) à l'aide d'un angle de volant de direction (a) et celle-ci étant communiquée avec une position réelle de la crémaillère (8) ou avec un angle de braquage de roue (β) mesuré en tant que valeur réelle (X) à une unité de régulation (13), laquelle calcule à partir de là un couple de consigne (T1) du moteur électrique (11) de l'organe final de direction (5), **caractérisé en ce que** les étapes supplémentaires suivantes sont prévues pour la commande :
* surveillance d'une puissance du moteur électrique (11) nécessaire pour atteindre la position de consigne (Xd) déterminée ;
* dans le cas où la puissance nécessaire dépasse la puissance maximale du moteur électrique (11), mise en fonctionnement du moteur électrique (11) avec la puissance maximale et augmentation d'un moment de rappel appliqué au volant de direction (3) et s'opposant à une poursuite de la torsion.

2. Procédé selon la revendication 1, **caractérisé en ce que** l'augmentation du couple appliqué au volant de direction (3) s'effectue au moyen de l'actionneur de rétroaction (4), lequel fait passer un contre-couple à l'opposé de l'instruction de direction dans un arbre de direction (2) relié au volant de direction (3).

3. Procédé selon la revendication 1 ou 2, **caractérisé en ce que** l'augmentation du couple appliqué au volant de direction (3) est dimensionnée de telle sorte qu'un décalage entre l'angle de volant de direction (a) et l'angle de braquage de roue (β) peut être réduit.

4. Procédé de commande d'un système de direction à commande électrique (1) pour des véhicules automobiles, comprenant un organe final de direction (5) agissant sur les roues directrices (6) et régulé électroniquement en fonction d'un souhait de direction d'un conducteur, lequel produit un mouvement de translation d'une crémaillère (8) en vue de diriger les roues (6), et un actionneur de rétroaction (4) qui transmet les rétroactions de la route (60) à un volant de direction (3) sous la forme d'un moment de rappel, une position de consigne (Xd) de la crémaillère (8) étant déterminée dans une unité de traitement de signal (10) à l'aide d'un angle de volant de direction (a) et celle-ci étant communiquée avec une position réelle de la crémaillère (8) ou avec un angle de braquage de roue (β) mesuré en tant que valeur réelle (X) à une unité de régulation (13), laquelle calcule à partir de là un couple de consigne (T1) du moteur électrique (11) de l'organe final de direction (5), **caractérisé en ce que** les étapes supplémentaires suivantes sont prévues pour la commande :
* surveillance d'une puissance du moteur électrique (11) nécessaire pour atteindre la position de consigne (Xd) déterminée ;
* dans le cas où la puissance nécessaire dépasse la puissance maximale du moteur électrique (11), mise en fonctionnement du moteur électrique (11) avec la puissance maximale et réduction de la modification dans le temps de la position de consigne (Xd) de la crémaillère (8), et ce de telle sorte que dans une position neutre du volant de direction (3), la position réelle (X) de la crémaillère (8) correspond à la position de consigne (Xd) de la crémaillère (8).

5. Procédé selon la revendication 4, **caractérisé en ce que** l'unité de régulation (13) possède un dispositif de limitation (15) qui limite la modification dans le temps de la position de consigne (Xd) de telle sorte qu'un décalage entre la position de consigne et la position réelle de la crémaillère (8), qui se produit lors d'un braquage, est de nouveau corrigé lors du contre-braquage.

6. Procédé selon la revendication 4 ou 5, **caractérisé en ce que** les étapes supplémentaires suivantes sont prévues pour la commande :
* dans le cas où la puissance nécessaire dépasse la puissance maximale du moteur électrique (11), augmentation d'un moment de rappel appliqué au volant de direction (3) et s'opposant à une poursuite de la torsion.

7. Procédé selon la revendication 6, **caractérisé en ce que** l'augmentation du couple appliqué au volant de direction (3) s'effectue au moyen de l'actionneur de rétroaction (4), lequel fait passer un contre-couple à l'opposé de l'instruction de direction dans un arbre de direction (2) relié au volant de direction (3).

8. Système de direction à commande électrique (1) pour un véhicule automobile, comprenant :
- un organe final de direction (5) agissant sur les roues directrices (6) et régulé électroniquement,
- une unité de traitement de signal (10),
- un actionneur de rétroaction (4), qui peut être sollicité par le biais d'un volant de direction (3) par un conducteur avec un souhait du conducteur pour un angle de braquage et délivre en sortie un signal de rétroaction au volant de direction (3) en tant que réaction au souhait du conducteur et un état de conduite du véhicule automobile,
- un dispositif de transmission de signal, qui communique le souhait du conducteur à l'unité de traitement de signal (10),
- l'unité de traitement de signal (10) déterminant une position réelle (Xd) du mécanisme de direction (8) et communiquant celle-ci avec une position réelle de la crémaillère (8) ou avec un angle de braquage de roue (β) mesuré en tant que valeur réelle (X) à une unité de régulation (13), laquelle commande l'organe final de direction (5), afin de transformer le souhait du conducteur en un mouvement de braquage des roues directrices (6), **caractérisé en ce que** le système de direction à commande électrique (1) est conçu pour mettre en œuvre un procédé selon l'une des revendications 1 à 7.
